# EUROPÄISCHE PATENTSCHRIFT

(11) **EP 1 714 848 B1**
(45) Veröffentlichungstag und Bekanntmachung des Hinweises auf die Patenterteilung: **02.12.2009**
(21) Anmeldenummer: 06007947.2
(22) Anmeldetag: 18.04.2006
(51) Int. Cl.: B61D 15/00, B61D 3/20, B61D 3/04, B60F 1/04, B65D 90/18, B62D 63/06

(54) **Mobiles Transportsystem**
Mobile transport system
Système de transport mobile

(30) Priorität: 20.04.2005 DE 102005018529
(43) Veröffentlichungstag der Anmeldung: 25.10.2006
(73) Patentinhaber: Walter, Bruno, 6713 Ludesch (AT)
(72) Erfinder: Walter, Bruno, 6713 Ludesch (AT)
(74) Vertreter: Riebling, Peter

(56) Entgegenhaltungen:
- DE-A1- 4 421 452
- DE-A1- 10 238 982
- GB-A- 693 665
- US-A- 6 155 770

## Beschreibung

Die Erfindung betrifft ein mobiles Transportsystem nach dem Oberbegriff des Patentanspruchs 1.

Mit dem Gegenstand der auf die gleiche Anmelderin zurückgehenden Druckschrift DE 102 38 982 A1 ist ein Transportfahrzeug für schienengebundene Transportsysteme bekannt geworden, welches für den Transport von Lasten geeignet ist. Die in etwa parallel zueinander angeordneten Stirnböcke sind in Schienenlängsrichtung durch jeweilige Seitenholme miteinander verbunden. Das schienengebundene Transportsystem weist zwei Radsätze zum Fahren auf Schienen auf und eine zwischen den vorderen und hinteren Stirnböcken heb- und senkbar angeordnete Hubplattform, wobei mindestens einer der Radsätze direkt über ein Radsatzgetriebe antreibbar ist. Der Fahrwerksrahmen des Transportfahrzeuges ist hierbei in zwei Hälften geteilt.

Das Fahrwerk ist derart konstruiert, dass schwere Lasten, wie beispielsweise ein Container oder vergleichbare Lasten, welche auf das Transportfahrzeug aufgebracht werden, die auftretenden Schub- und Drehkräfte vor und während des Transportes den Fahrwerksrahmen des Transportfahrzeuges nicht beschädigen, verbiegen oder gar zerstören.

Aus diesem Grunde müssen derartige Transportfahrzeuge für den Schienenverkehr sehr stabil und verwindungssteif gebaut werden.

Darüber hinaus ist es häufig erforderlich, Lasten auch auf wechselnden Transportwegen zu transportieren.

Ein Nachteil der vorbenannten Erfindung ist, dass ein derartiges Transportsystem bisher nur für einen schienengebundenen Transport ausgebildet ist und die Lasten bei wechselnden Transportwegen auf ein entsprechend geeignetes Transportsystem umgeladen werden müssen.

Die vorliegende Erfindung ist anhand eines Transportsystems mit einem Container näher beschrieben. Sie soll jedoch nicht auf die Ausstattung mit einem Container beschränkt werden.

Derartige Transportsysteme werden zum Beispiel für den Transport von humanitären und/oder technischen Hilfsmitteln bei Rettungsmaßnahmen eingesetzt, welche zum Beispiel von der Straße auf die Schienen wechseln müssen, oder umgekehrt.

Der Erfindung liegt deshalb die Aufgabe zugrunde, ein Transportfahrzeug der eingangs genannten Art so weiterzubilden, dass das Transportfahrzeug entsprechend seiner bestimmungsgemäßen Auslegung für wechselnde Transportwege einsetzbar ist und einen konstruktiv einfachen Aufbau aufweist, welcher zur Aufnahme von zum Beispiel Container oder vergleichbaren Lasten geeignet ist.

Mit der Druckschrift DE 102 38 982 A1 wird ein schienengebundenes Transportfahrzeug für den Transport von Fahrzeugen, Maschinen, Werkzeugen, Hilfs- und anderen Mitteln offenbart, wobei das Transportfahrzeug zwei Stirnböcke aufweist, welche in Schienenlängsrichtung durch zwei Seitenholme miteinander verbunden sind und zwei Radsätze zum Fahren auf Schienen aufweist, wobei zwischen den beiden Stirnböcken eine heb- und senkbare Hubplattform angeordnet ist.
Diese auf den eigenen Anmelder zurückgehende Druckschrift weist den Nachteil auf, dass das Transportfahrzeug ausschließlich für den Transport von Lasten im Schienenverkehr ausgebildet ist.

Mit der Druckschrift GB 693 665 A wird ein Motorfahrzeug offenbart, wobei das Kopf- und Fußteil mittels einem aufgesetzten Rahmengestell miteinander verbunden sind, welches zwei querverlaufende Traversen aufweist, die an Stützen gesichert sind und einen Radsatz aufweisen und unterhalb des Gestelle einen freien Raum, in welchem ein Container eingebracht ist.
Dieser Druckschrift ist nicht zu entnehmen, dass die Rädersätze sowohl für den Einsatz auf Schienen und Straßen ausgebildet sind und dass das Rahmengestell als leicht montier- bzw. demontierbare Verbindung ausgebildet ist.

Mit der Druckschrift US 6 155 770 A wird ein hydraulisch wirkendes, mobiles Traggestell offenbart, welches einen Standard-Container vom Boden anhebt und auf ein Transportfahrzeug abstellt, wobei das Transportfahrzeug mit seiner Transportfläche unter dem angehobenen Container angeordnet ist, wenn der Container hydraulisch auf der Transportfläche des Transportfahrzeuges abgestellt ist.
Dieser Druckschrift ist nicht zu entnehmen, dass das hydraulische Traggestell für ein mobiles Bewegen auf Straßen und/oder Schienen ausgebildet ist, wenn der Container innerhalb des Traggestells angeordnet ist.

Mit der Druckschrift DE 44 21 452 A1 wird ein Transportsystem zum Transportieren von Brückenteilen einer zerlegbaren Brücke offenbart, welche eine Rahmenkonstruktion aufweist, an welcher seitlich lösbare, in der Höhe einstellbare Radhalterungen angeordnet sind.
Diese Druckschrift weist den Nachteil auf, dass diese lediglich einen Transport von Lasten für den Straßen-Transport vorsieht und ein selbsttätiges Bewegen des Transportsystems nicht offenbart ist.

Zur Lösung der gestellten Aufgabe ist die Erfindung dadurch gekennzeichnet, dass das mobileTransportsystem zum Transport von Containern und/oder anderer Lasten für den schienengebundenen- und oder für den Straßen-Transport gemäß dem kennzeichnenden Teil des Anspruchs 1 ausgebildet ist.

Mit der gegebenen technischen Lehre ergibt sich nun der wesentliche Vorteil, dass man ein Transportfahrzeug vorsieht, welches mittels einer entsprechenden Hubmechanik geeignet ist, unterschiedliche Transportwege zu befahren, um somit zum Beispiel technische- und/oder humanitäre Hilfsmittel, wie zum Beispiel Container für humanitäre und/oder technische Rettungseinsätze direkt an den Einsatzort zu transportieren.

Der einfacheren Beschreibung wegen wird in der nachfolgenden Beschreibung nur davon ausgegangen, dass ein erfindungsgemäßes Transportfahrzeug für den schienengebundenen- und Straßen-Transport mit einem Container ausgestattet ist, welcher für den Einsatz von Rettungsmaßnahmen von zum Beispiel Löschvorgängen direkt am Einsatzort einsetzbar ist.

Hierauf ist die Erfindung jedoch nicht beschränkt. Es können verschiedenartige Container und/oder Lasten oder dergleichen mit dem erfindungsgemäßen Transportfahrzeug transportiert werden.

In einer bevorzugten Ausgestaltung der Erfindung ist es vorgesehen, dass ein Container mit einem Löschsystem ausgestattet ist, welches zur Brandbekämpfung eines Brandes in einem Tunnelsystem, wie zum Beispiel ein Eisenbahntunnel, U-Bahntunnel oder Autotunnel eingesetzt wird.

Hierzu weist der Container an der Außenfläche seiner Bodenseite eine Fahrzeugachse mit zwei Laufrädern auf, wobei die Fahrzeugachse fest mit dem Container verbunden ist und an seiner vorderen Stirnseite eine zum Stand der Technik bekannte, steckbare Zugdeichsel, welche demontierbar ist.

An der vorderen und rückseitigen Stirnwand sind zusätzlich jeweils zwei Lastösen im oberen Bereich der Dachkonstruktion und je zwei Tragösen im unteren Bereich seiner Bodenplatte angeordnet.

Anstelle einer hebbaren oder absenkbaren Hubplattform wird nunmehr das erfindungsgemäße Transportfahrzeug mit dem Container bestückt, wobei die Innenabmessungen des Rahmensystems des Transportfahrzeuges derart ausgebildet sind, dass der Container mit seinen geometrischen Außenabmessungen ein definiertes Spiel zum Rahmenaufbau des Transportfahrzeuges aufweist.

Für einen Schienentransport werden die Aufhängeketten an den Lastösen des Containers befestigt, der Container wird mittels integrierter Hebewinden vom Boden angehoben, so dass die Laufräder außer Eingriff und die am Transportfahrzeug befestigten Schienenräder im Eingriff sind.

Für einen Straßentransport werden die Aufhängeketten an den Tragösen des Containers befestigt, das Transportfahrzeug wird mittels gleicher Hebewinden vom Boden angehoben, so dass die Laufräder im Eingriff und das gesamte Transportfahrzeug sich im angehobenen Zustand befindet. Nun kann das Transportsystem mittels der angesteckten Zugdeichsel durch ein entsprechendes Zugfahrzeug über eine Straße transportiert werden.

Auf Grund seines relativ geringen Eigengewichtes lässt sich das komplette Transportsystem mittels angesteckter Zugdeichsel relativ einfach rangieren.

Weiters kann das Transportsystem mit einem mechanischen Antrieb ausgestattet sein und ein entsprechender Fahrzeugführer das Transportsystem mittels dem mechanischen Antrieb verfahren.

Eine weitere Ausgestaltung der Erfindung ist, dass das Transportfahrzeug des Transportsystems für den schienengebundenen Transport als selbstfahrendes Transportfahrzeug ausgebildet ist.

Hierzu kann der Antrieb des selbstfahrenden Transportfahrzeuges zusätzlich mit einer Funksteuerung ausgestattet sein.

In einer anderen Ausgestaltung können selbstverständlich auch andere Fahrantriebe vorgesehen werden, wie zum Beispiel Elektroantriebe.

Es kann selbstverständlich auch jede andere beliebige Art des Fahrantriebes für das erfindungsgemäße Transportfahrzeug verwendet werden.

Eine weitere Ausgestaltung der Erfindung ist, dass der Container derart konstruiert ist, dass dieses zum Beispiel auch als Personenschutz oder Personenbergung in einem Brandfall beziehungsweise bei einem Unfall in einem Tunnelsystem eingesetzt werden kann.

Alle diese vorbenannten Ausführungsformen der Erfindung weisen den wesentlichen Vorteil auf, dass ein Container beziehungsweise eine andere Last mittels einem Transportfahrzeug auf verschiedenen Transportwegen transportiert werden kann, ohne das zuvor der Container oder die Last umgeladen werden muss.

Ein weiteres wesentliches Merkmal der Erfindung ist, dass das Transportfahrzeug auch leicht zerlegbar und transportierbar ausgebildet sein kann.

Die beiden Stirnböcke werden durch parallel zueinander angeordnete Seitenholme zusammengesteckt, wobei beliebige Steck- oder Schließverbindungen vorgesehen sein können.

Derartige Steck- oder Schließverbindungen können einfache Steckzapfen sein, die in zugeordnete Ausnehmungen eingreifen. Ebenso können Schnellverschlüsse verwendet werden, wie zum Beispiel Exzenterschnellverschlüsse, Klampen, Schraubverschlüsse und dergleichen mehr.

Der vordere Stirnbock und der hintere Stirnbock werden sich gegenüberstehend durch die jeweiligen Seitenholme miteinander zusammengesteckt. Nun kann die Hubmechanik montiert werden. Diese besteht im einfachsten Fall aus einem Kettenhubwerk, welches später anhand der Zeichnungen noch näher beschrieben wird.

Statt eines Kettenhubwerkes können selbstverständlich alle anderen höhenverstellbaren Hubwerke verwendet werden, wie zum Beispiel hydraulische Hubwerke, Spindelhubwerke und dergleichen mehr.

Durch Betätigung der Hubmechanik wird nun entweder der Container oder das Transportfahrzeug entsprechend angehoben, je nach dem, ob die Aufhängeketten an den Last- oder an den Tragösen befestigt sind.

Hierdurch wird das Transportsystem in einen fahrfähigen Zustand gebracht und kann nun mit seinem Fahrantrieb autonom, mechanisch gesteuert, funkgesteuert, oder mittels entsprechendem Zugfahrzeug, verfahren werden.

Ein wesentlicher Vorteil des erfindungsgemäßen Transportsystems liegt also auch darin, dass es leicht zerlegbar ist und deshalb an Ort und Stelle - wo eine Last oder ein Container aufgenommen werden soll - erst zusammengesteckt werden kann.

Der besondere Vorteil der leichten Zerlegbarkeit ergibt sich auch im Falle von Schienenunglücken. Hierbei kann es vorgesehen sein, dass mit einem, derartigen Transportsystems Rettungsgeräte auf der Schiene transportiert werden und bis zur Unfallstelle verfahren werden müssen. Oft sind an der Unfallstelle jedoch die Gleise zerstört, so dass ein weiteres Vorrücken des Transportsystems nicht mehr möglich ist. Dank des unterschiedlichen Einsatzes von Transportausführungen und der leichten Zerlegbarkeit des Transportfahrzeuges kann nun das Rettungsgerät entweder auf dem Gleiskörper selbsttätig zur Unfailstelle oder über den Straßentransport vorrücken. Das Transportfahrzeug kann dann hierbei beispielsweise zerlegt werden und ebenfalls jenseits der Unfallstelle wieder auf dem Schienenkörper aufgegleist und weiter verfahren werden.

Ein derartiges Schienentransportfahrzeug kann von fünf Personen über Bahnsteige und andere Hindernisse, wie zum Beispiel Treppen, Unterführungen oder Unfallstellen getragen werden und dann an Ort und Stelle wieder aufgebaut werden.

Bei einem Wechsel des Transportweges zum Beispiel von der Straße auf ein Schienensystem ist lediglich ein Straßen-Übergang eines Schienensystems, auch bekannt als "Bahnübergang" notwendig.

Aufgrund des geringen Eigengewichtes des Transportsystems 1 lässt sich das komplette System mühelos von zwei Personen ohne Zugfahrzeug rangieren.

Hierzu wird das Transportsystem in Längsrichtung zu den Schienen in eine Eingleisposition gebracht. Nach der manuellen Betätigung einer Feststellbremse an der Fahrzeugachse wird die steckbare Zugdeichsel von dem Container demontiert. Mit den beiden Windengetriebe am vorderen und hinteren Stirnbock wird das angehobene Transportfahrzeug mittels an den Lastösen eingehakten Aufhängeketten auf das Schienensystem abgesenkt, bis die vorderen und hinteren Radsätze und mit den Schienen im Eingriff sind.

Die Aufhängeketten werden entlastet, aus den Lastösen ausgehängt und an die unten befindlichen Tragösen wieder eingehängt. Durch das nachfolgende Spannen der Aufhängeketten wird nunmehr die Fahrzeugachse mit den Laufrädern und die vordere Stütze angehoben, so dass diese mit der Bodenfläche außer Eingriff sind und eine Bodenfreiheit aufweist, welche dem Lichtraumprofil der Deutschen Bundesbahn entspricht.

Der Container hängt nun an den Aufhängeketten innerhalb des Rahmenprofils des Transportfahrzeuges.

Eine weitere Ausführungsform der Erfindung ist, dass ein Container mit einer Tandem-Fahrzeugachse ausgestattet ist.

Eine zusätzliche Ausführungsform des Transportsystems ist, das anstelle des Containers ein aus dem Stand der Technik bekannter Straßennachläufer, wie zum Beispiel ein Sattelauflieger mit einer steckbaren Deichsel oder ähnlichem eingesetzt wird.

Der Erfindungsgegenstand der vorliegenden Erfindung ergibt sich nicht nur aus dem Gegenstand der einzelnen Patentansprüche, sondern auch aus der Kombination der einzelnen Patentansprüche untereinander.

Alle in den Unterlagen, einschließlich der Zusammenfassung, offenbarten Angaben und Merkmale, insbesondere die in den Zeichnungen dargestellte räumliche Ausbildung werden als erfindungswesentlich beansprucht, soweit sie einzeln oder in Kombination gegenüber dem Stand der Technik neu sind.

Im folgenden wird die Erfindung anhand von lediglich einen Ausführungsweg darstellenden Zeichnungen näher erläutert. Hierbei gehen aus den Zeichnungen und ihrer Beschreibung weitere erfindungswesentliche Merkmale und Vorteile der Erfindung hervor.

### Es zeigen:

- Figur 1:: eine Seitenansicht eines Transportsystems ohne Fahrzeugachse im angehobenen Zustand des Containers;

- Figur 2:: eine Seitenansicht eines Transportsystems mit Fahrzeugachse im angehobenen Zustand des Containers;
- Figur 3:: eine Seitenansicht eines Transportsystems mit Fahrzeugachse mit herabgelassenen Container;
- Figur 4:: eine Seitenansicht eines Transportsystems mit Fahrzeugachse mit herabgelassenen Container und Aufhängeketten;
- Figur 5:: eine Seitenansicht eines Transportsystems mit Fahrzeugachse mit herabgelassenen Container und befestigten Aufhängeketten an den Lastösen;
- Figur 6:: eine Seitenansicht eines Transportsystems mit Fahrzeugachse und Zugdeichsel im angehobenen Zustand des Transportfahrzeuges und befestigten Aufhängeketten an den Lastösen.

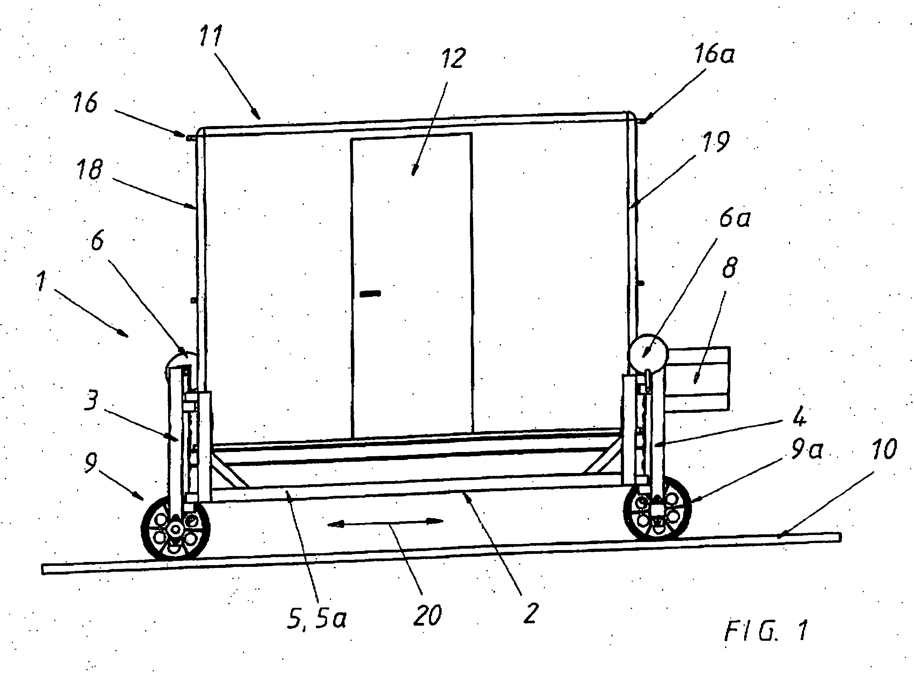

In Figur 1 ist ein Transportsystem 1 dargestellt, wobei ein Transportfahrzeug 2 einen rechteckförmigen, geschlossenen Container 11 aufweist, welcher links und rechts auf seiner Längsseite mit je einer verschließbaren Öffnung 12 ausgestattet ist und die Öffnung je nach Ausführung als eine verschließbare Türe oder dergleichen ausgebildet und von Personen passierbar ist.

Der Container 11 übt während des Transportes entsprechend hohe Verschiebe- und Verwindungskräfte auf das Transportfahrzeug 2 aus, wobei diese Kräfte jedoch über den Tragrahmen des Transportfahrzeuges 2 auf die Schienen 10 abgeleitet werden.

Der Container 11 ist zur Aufnahme von Personen zum Schutz gegen Gesundheitsschädigungen und/oder zur Aufnahme von Bergungs- oder Rettungshilfsmittel geeignet. Darüber hinaus kann der Container 11 auch für den Einsatz von Atemschutzmaßnahmen für Lebewesen bei einem Tunnelbrand mit starker Rauchentwicklung ausgebildet sein.

Im oberen Bereich der Dachkonstruktion weist der Container 11 im Bereich der äußeren Körperkanten jeweils zwei Lastösen 16, 16a an der vorderen und hinteren Stirnwand 18, 19 auf, welche zur Befestigung der jeweiligen Aufhängeketten 7, 7a mit an Ihren Enden entsprechend ausgestatteten, hier nicht dargestellten Haken, Schekel oder vergleichbarem dienen.

Der Container 11 ist mit seinen äußeren Abmessungen auf die Innenmaße der Rahmenkonstruktion des Transportfahrzeuges 2 derart abgestimmt, dass der Container 11 eine festgelegte Distanz zur Rahmenkonstruktion des Transportfahrzeuges 2 aufweist.

Darüber hinaus weist der Container 11 im unteren Bereich seiner Bodenkonstruktion im Bereich der äußeren Körperkanten jeweils zwei Tragösen 17, 17a an der vorderen und hinteren Stirnwand 18, 19 auf, welche ebenfalls zur Befestigung der vorbenannten Aufhängeketten 7, 7a dienen.

Weiterhin ist in Figur 1 ein Transportfahrzeug 2 für den Schienenverkehr dargestellt, wodurch die leichte Zerlegbarkeit des Transportfahrzeuges 2 ersichtlich ist.

Es ist ein vorderer Stirnbock 3 vorhanden, an dem ein vorderer Radsatz 9 angeordnet ist. Der Stirnbock 3 hat einen etwa rechteckförmigen Tragrahmen, wobei an der Oberseite des Tragrahmens der eine Teil des Hubtragwerkes angeordnet ist. Dieses besteht in einem bevorzugten Ausführungsbeispiel aus einem Windengetriebe 6, welches Kettenräder aufweist, über welche jeweils eine Aufhängekette 7 läuft.

Der hintere Stirnbock 4 ist in fast der gleichen Weise ausgebildet. Zusätzlich ist an der Rahmenkonstruktion des Stirnbocks 4 ein Motorantrieb 8 befestigt, welcher den freien Radsatz 9a am hinteren Stirnbock 4 des Transportfahrzeuges 2 antreibt und somit das gesamte Transportsystem 1 als selbstfahrendes Transportsystem 1 kennzeichnet. Der Motorantrieb 8 ist vorzugsweise mit einem entsprechend geeigneten Verbrennungsmotor ausgestattet.

Der Tragrahmen des Transportfahrzeuges 2 ist leicht zerlegbar und erhält durch die starre Ausführung des Containers 11 eine relativ hohe Stabilität und eine ebenso relativ hohe Verwindungssteifheit, welche den Transport des Transportsystems 1 im Schienenverkehr als auch im Straßenverkehr wesentlich erleichtert.

Um die beiden Stirnböcke 3, 4 miteinander zu verbinden sind Steckaufnahmen vorgesehen, welche aus dem Stand der Technik bekannt sind und hier nicht gesondert dargestellt werden. Hierbei sind an den linken und rechten Seitenholmen 5, 5a jeweils Steckzapfen angeordnet, die in zugeordnete Steckaufnahmen an den Stirnböcken 3, 4 eingreifen. Auf diese Weise können die beiden Stirnböcke 3, 4 leicht über die beiden Seitenholme 5, 5a zusammengesteckt werden.

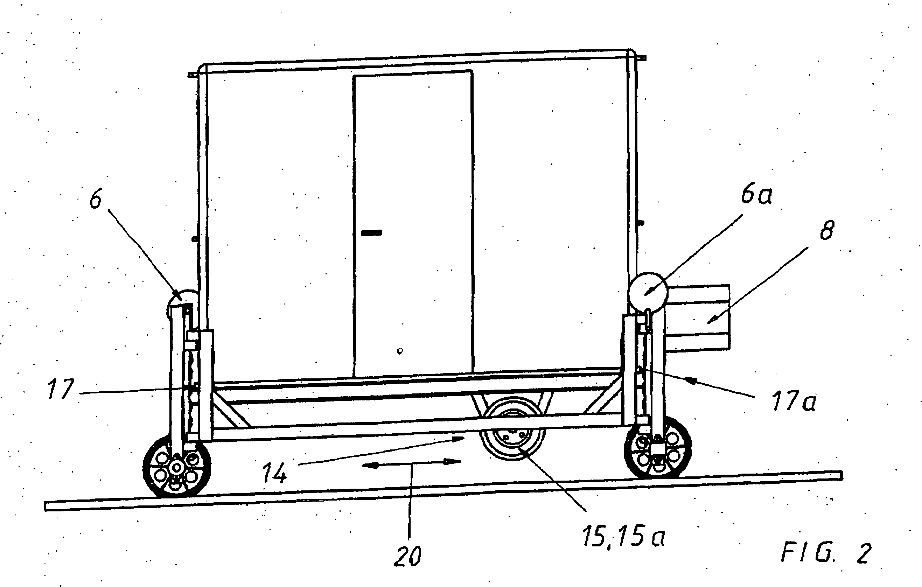

Die Figur 2 zeigt das fertig zusammengebaute Transportfahrzeug 2 mit einem Container 11 im angehobenen Zustand, wobei lediglich angedeutet ist, dass die Aufhängeketten 7, 7a in die im unteren Bodenbereich befindlichen Tragösen 17, 17a eingreifen und die Aufhängeketten 7, 7a über die zugeordneten Kettenräder des Windengetriebes 6, 6a laufen.

Des Weiteren ist an der Unterseite der Bodenfläche des Containers 11 eine Fahrzeugachse 14 quer zur Längsrichtung 20 des Containers 11 fest montiert, welche jeweils anihren freien Enden ein drehgelagertes Laufrad 15, 15a aufweist, welches im angehobenen Zustand des Containers 11 einen einstellbaren Abstand zur Bodenfläche aufweist und wobei die Radsätze 9, 9a mit den Schienen 10 für einen Schienentransport im Eingriff sind.

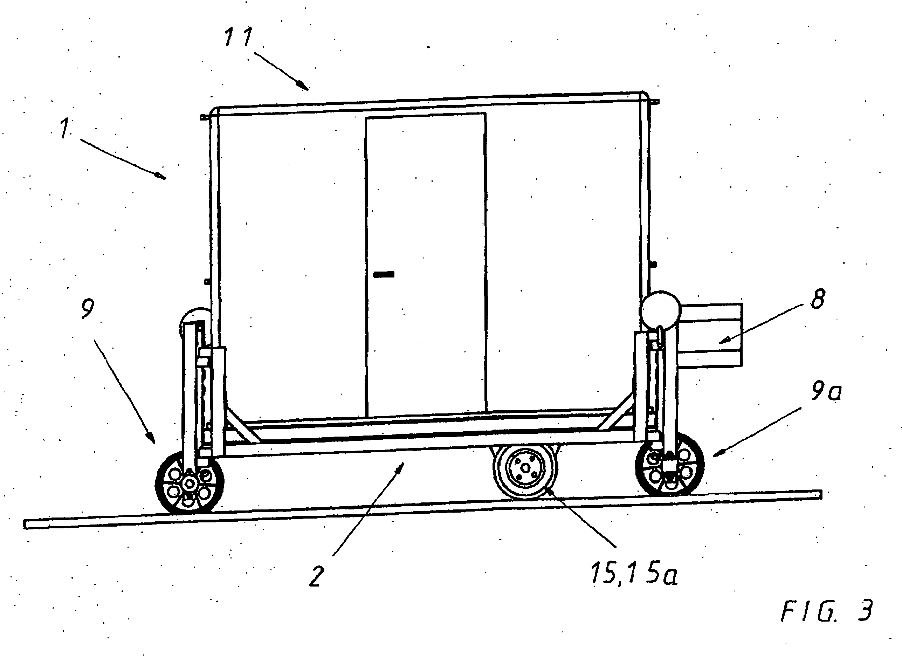

Die Figur 3 zeigt ein erfindungsgemäßes Transportsystem 1 gemäß den Figuren 1 und 2, wobei die insgesamt vier Aufhängeketten 7, 7a in die unteren Tragösen 17, 17a am Container 11 eingreifen und durch manuelle Betätigung des Windengetriebes 6, 6a die Fahrzeugachse 14 des Containers 11 auf die Bodenfläche absenkbar ist, wobei die beiden Radsätze 9, 9a des Transportfahrzeuges 2 mit den Schienen 10 im Eingriff stehen und die beiden Laufräder 15, 15a der Fahrzeugachse 14 auf der Bodenfläche aufliegen.

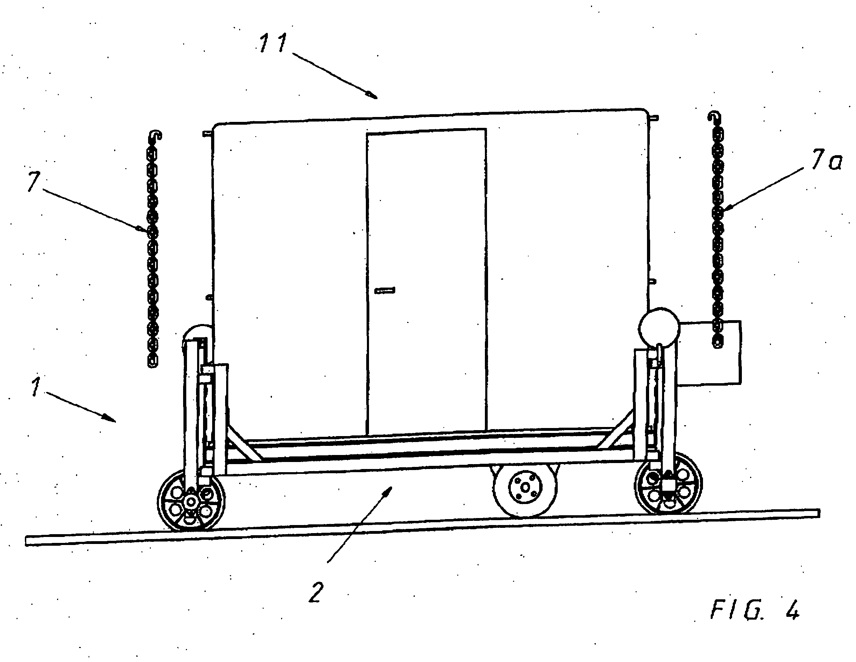

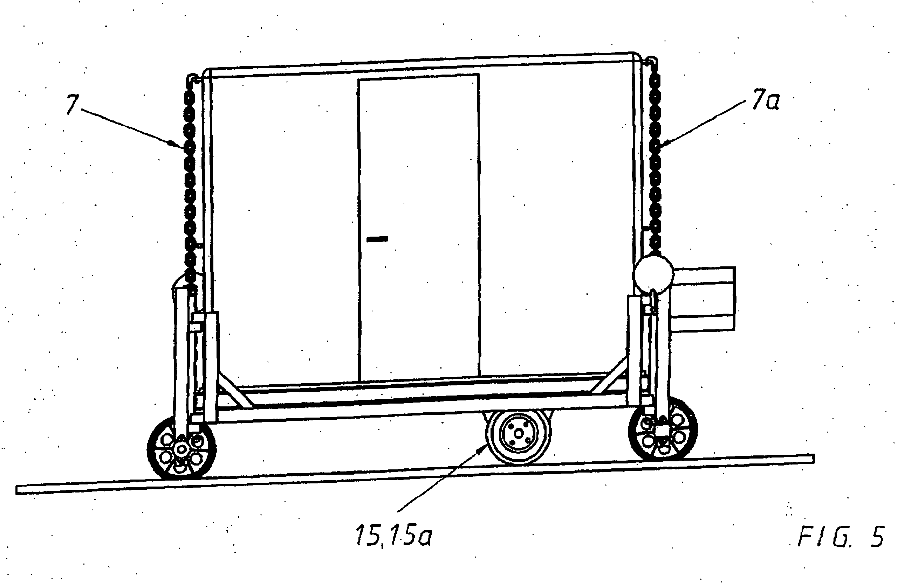

Figur 4 und Figur 5 zeigen die Aufhängeketten 7, 7a mit ihren am Ende befindlichen Befestigungshaken, welche aus den unteren Tragösen 17, 17a entfernt und in die Lastösen 16, 16a im Bereich der Dachkonstruktion des Containers 11 mit ihren am Ende befindlichen Befestigungshaken wieder eingehakt werden.

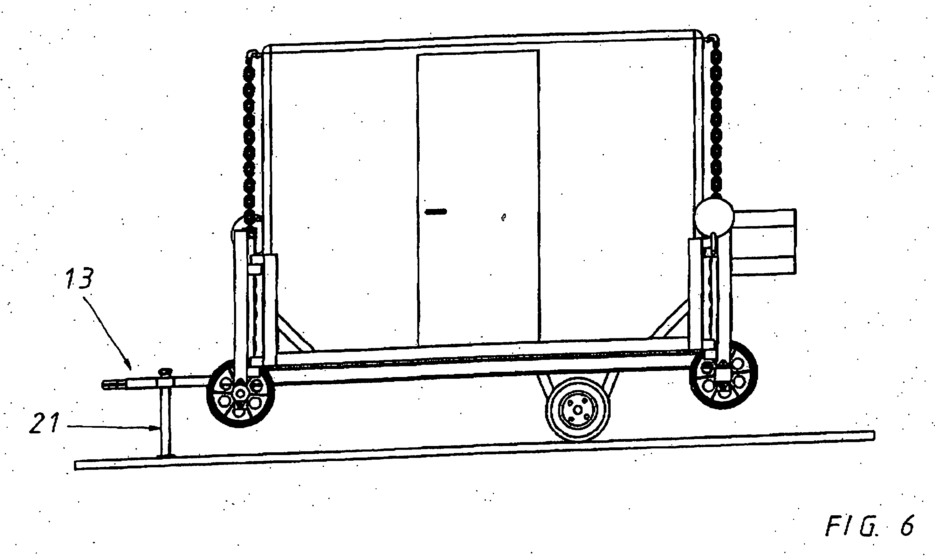

Figur 6 zeigt die zweite Variante der Hebefunktion, wobei ein zum Stand der Technik zählende Zugdeichsel 13 etwa mittig an der Unterseite der Bodenfläche im Bereich der vorderen Stirnwand 18 angeordnet ist. Zusätzlich weist die Zugdeichsel 13 eine höheneinstellbare Stütze 21 auf, welche eine waagerechte Lage des Transportsystems 1 beim Wechsel des Transportweges (Schiene/Straße) gewährleistet.

Durch manuelle Betätigung des Windengetriebes 6, 6a über eine Handkurbel wird nunmehr das Transportfahrzeug 2 angehoben, so dass die Radsätze 9, 9a mit den Schienen 10 außer Eingriff sind und lediglich die an den äußeren Enden der Fahrzeugachse 14 angeordneten Laufrädern 15, 15a und die Stütze 21 der Zugdeichsel 13 mit der Bodenfläche Kontakt haben. Vorzugsweise ist die Stütze 21 der Zugdeichsel 13 von Ihrer Stützlänge derart ausgelegt, dass das Transportsystem 1 im angehobenen Zustand des Transportfahrzeuges 2 eine in etwa waagerechte Position einnimmt.

Durch das Entfernen der Stütze 21 Bereich der Zugdeichsel 13 kann das Transportsystem 1 an ein geeignetes Zugsystem mit entsprechender Aufnahmekupplung für die Zugdeichsel 13 angeordnet werden, so dass nunmehr lediglich die Laufräder 15, 15a der Fahrzeugachse 14 einen Bodenkontakt aufweisen und das Transportsystem 1 nunmehr einen Transport des Containers 11 auf der Straße vornehmen kann.

### Zeichnungslegende

| | | |
|---|---|---|
| 1 | Transportsystem | |
| 2 | Transportfahrzeug | |
| 3 | Stirnbock vorne | |
| 4 | Stirnbock hinten | |
| 5 | Seitenholm | 5a |
| 6 | Windengetriebe | 6a |
| 7 | Aufhängeketten | 7a |
| 8 | Motorantrieb | |
| 9 | Radsatz | 9a |
| 10 | Schienen | |
| 11 | Container | |
| 12 | Öffnung | |
| 13 | Zugdeichsel | |
| 14 | Fahrzeugachse | |
| 15 | Laufrad | 15a |
| 16 | Lastösen | 16a |
| 17 | Tragösen | 17a |
| 18 | Stirnwand vorne | |
| 19 | Stirnwand hinten | |
| 20 | Pfeilrichtung | |
| 21 | Stütze | |

## Patentansprüche

1. Mobiles Transportsystem (1) für den Transport von Lasten, wobei das Transportsystem (1) ein selbstfahrendes, relativ leicht demontierbares Transportfahrzeug (2) für den Schienenverkehr aufweist, welches zum Anheben und Absenken von Lasten eine Hebevorrichtung aufweist, **dadurch gekennzeichnet, dass** das mobile Transportsystem (1) zum Transport von Containern (11) und/oder anderer Lasten für einen schienengebundenen- und/oder für den Straßen-Transport ausgebildet ist, wobei der Container (11) an der Außenseite seiner Bodenfläche mindestens eine Fahrzeugachse (14) mit jeweils einem an ihrem freien Ende drehend gelagerten Laufrad (15, 15a) aufweist, welche in der angehobenen Position des Containers (11) außer Eingriff mit der Fahrebene sind, wobei das Transportfahrzeug (2) einen vorderen und hinteren Stirnbock (3, 4) aufweist, welche mittels zugehöriger Seitenholme (5, 5a) über eine beliebige Steck- oder Schließverbindung relativ leicht montierbar und demontierbar sind.

2. Mobiles Transportsystem (1) nach Anspruch 1, **dadurch gekennzeichnet, dass** der Container (11) ein mit einem Löschsystem ausgestatteter Container (11) ist, welcher anstelle einer heb- und absenkbaren Hubplattform im Transportfahrzeug (2) integriert ist und mit seinen geometrischen Außenabmessungen ein definiertes Spiel zum Rahmenaufbau des Transportfahrzeuges (2) aufweist.

3. Mobiles Transportsystem (1) nach Anspruch 1 und 2, **dadurch gekennzeichnet, dass** der Container (11) Trag- und Lastösen an der vorderen und hinteren Stirnwand (18, 19) aufweist, an welche Aufhängeketten (7, 7a) befestigbar sind, wobei die Aufhängeketten (7, 7a) den Container (11) mittels einem Windengetriebe (6, 6a) in eine angehobene beziehungsweise abgesenkte Position anordnen.

4. Mobiles Transportsystem (1) nach den Ansprüchen 1 bis 3, **dadurch gekennzeichnet, dass** der Container (11) in einer mittig angeordneten Position im Bereich der vorderen Stirnwand (18) eine Zugdeichsel (13) mit einer niveauausgleichenden Stütze (21) aufweist, welche ansteckbar ausgebildet ist, wobei das Transportsystem (1) mittels einem entsprechend angekuppelten Zugfahrzeug verfahrbar ist, wenn der Container (11) eine abgesenkte Position aufweist und die Laufräder (15, 15a) im Eingriff mit der Fahrebene sind.

5. Mobiles Transportsystem (1) nach den Ansprüchen 1 bis 4, **dadurch gekennzeichnet, dass** das Transportfahrzeug (2) mittels Umhängen der Aufhängeketten (7, 7a) von den Tragösen (17, 17a) in die Lastösen (16, 16a) und Betätigung eines Windengetriebes (6) eine angehobene Position einnimmt, wodurch die am Fahrzeugrahmen angeordnete Radsätze (9, 9a) außer Eingriff mit den Schienen (10) sind.

6. Mobiles Transportsystem (1) nach den Ansprüchen 1 bis 5, **dadurch gekennzeichnet, dass** der Container (11) mittels Einhängen der Aufhängeketten (7, 7a) in die Tragösen (17, 17a) und Betätigung des Windengetriebes (6) eine angehobene Position einnimmt, wodurch die Radsätze (9, 9a) des Transportfahrzeuges (2) im Eingriff mit den Schienen (10) sind und das Transportsystem (1) über das Transportfahrzeug (2) auf den Schienen (10) verfahrbar ist.

7. Mobiles Transportsystem (1) nach den Ansprüchen 1 bis 6, **dadurch gekennzeichnet, dass** das Transportfahrzeug (2) einen mechanischen oder elektrischen Motorantrieb (8) aufweist, welcher am hinteren Stirnbock (4) befestigt ist und den hinteren Radsatz (9a) antreibt, wodurch das Transportfahrzeug (2) eine selbsttätige Fahrbewegung (20) ausführt und das der Motorantrieb (8) funkgesteuert ausgebildet sein kann.

8. Mobiles Transportsystem (1) nach den Ansprüchen 1 bis 7, **dadurch gekennzeichnet, dass** der Container (2) für eine Brandbekämpfung in Tunnelsystemen als Atemschutzraum oder dergleichen ausgebildet ist.

9. Mobiles Transportsystem (1) nach den Ansprüchen 1 bis 8, **dadurch gekennzeichnet, dass** das Transportsystem (1) für den wechselnden Einsatz als schienengebundenes Transportsystem (1) oder als ein straßentransporttaugliches Transportsystem (1) ausgebildet ist.

## Claims

1. Mobile transport system (1) for the transportation of loads, the transport system (1) comprising an automotive, relatively easily removable transport vehicle (2) for railway traffic, said transport system comprising a lifting device for lifting and lowering loads, **characterised in that** the mobile transport system (1) is configured for the transportation of containers (11) and/or other loads for rail-mounted and/or road transportation, the container (11) comprising on the outer face of its base surface at least one vehicle axle (14) having a wheel (15, 15a) mounted rotatably at each of its free ends, which wheels are not engaged with the plane of travel when the container (11) is in the raised position, the transport vehicle (2) comprising a front and rear end stand (3, 4) which are relatively easily assembled and disassembled using associated side members (5, 5a) via any plug-in or locking connection.

2. Mobile transport system (1) according to claim 1, **characterised in that** the container (11) is a container (11) equipped with a discharge system, which container is integrated into the transport vehicle (2) in place of a raisable and lowerable lifting platform and, by way of its external shape and dimensions, comprises a defined clearance relative to the frame structure of the transport vehicle (2).

3. Mobile transport system (1) according to claims 1 and 2, **characterised in that** the container (11) comprises lifting eyes and clevises on the front and rear end wall (18, 19), to which suspension chains (7, 7a) can be fixed, the suspension chains (7, 7a) arranging the container (11) in a raised or lowered position by way of a winch transmission (6, 6a).

4. Mobile transport system (1) according to claims 1 to 3, **characterised in that** the container (11) comprises a tongue (13) having a levelling support (21) in a central position in the region of the front end wall (18), which tongue is configured so as to be insertable, the transport system (1) being mobile by way of a correspondingly coupled towing vehicle when the container (11) is in a lowered position and the wheels (15, 15a) are engaged with the plane of travel.

5. Mobile transport system (1) according to claims 1 to 4, **characterised in that** the transport vehicle (2) adopts a raised position by transferring the suspension chains (7, 7a) from the lifting eyes (17, 17a) into the clevises (16, 16a) and by actuating a winch transmission (6), the wheel sets (9, 9a) arranged on the vehicle frame not being engaged with the rails (10).

6. Mobile transport system (1) according to claims 1 to 5, **characterised in that** the container (11) adopts a raised position by lowering the suspension chains (7, 7a) into the lifting eyes (17, 17a) and by actuating the winch transmission (6), the wheel sets (9, 9a) of the transport vehicle (2) being engaged with the rails (10) and the transport system (1) being mobile on the rails (10) via the transport vehicle (2).

7. Mobile transport system (1) according to claims 1 to 6, **characterised in that** the transport vehicle (2) comprises a mechanical or electrical motor drive (8) which is fixed to the rear end stand (4) and drives the rear wheel set (9a), the transport vehicle (2) executing an automatic travelling movement (20) and it being possible for the motor drive (8) to be controlled remotely.

8. Mobile transport system (1) according to claims 1 to 7, **characterised in that** the container (2) is configured as a safe breathing space or the like for fire fighting in tunnel systems.

9. Mobile transport system (1) according to claims 1 to 8, **characterised in that** the transport system (1) is configured for use variously as a rail-mounted transport system (1) or as a transport system (1) suitable for road transportation.

## Revendications

1. Système de transport mobile (1) pour le transport de charges, le système de transport (1) comportant un véhicule de transport automobile (2) relativement facilement démontable qui est destiné à la circulation sur rails et qui comporte lui-même, pour soulever et abaisser des charges, un dispositif de levage, **caractérisé en ce que** le système de transport mobile (1) est conçu pour le transport de conteneurs (11) et/ou d'autres charges pour un transport ferroviaire et/ou routier, le conteneur (11) présentant sur le côté extérieur de sa surface de plancher au moins un axe de véhicule (14) avec des roues (15, 15a) qui sont montées en rotation sur ses extrémités libres et qui, dans la position soulevée du conteneur (11), ne sont pas en contact avec le plan de roulement, le véhicule de transport (2) présentant des supports avant et arrière (3, 4) qui peuvent être montés et démontés relativement facilement à l'aide de longerons latéraux associés (5, 5a), par l'intermédiaire d'une liaison d'emboîtement ou de fermeture quelconque.

2. Système de transport mobile (1) selon la revendication 1, **caractérisé en ce que** le conteneur (11) est constitué par un conteneur (11) qui est équipé d'un système d'extinction, qui est intégré dans le véhicule de transport (2) à la place d'une plate-forme de levage apte à être soulevée et abaissée et qui présente avec ses dimensions géométriques extérieures un jeu défini, par rapport à la structure de châssis du véhicule de transport (2).

3. Système de transport mobile (1) selon la revendication 1 ou 2, **caractérisé en ce que** le conteneur (11) comporte sur les parois frontales avant et arrière (18, 19) des anneaux porteurs et des anneaux de manutention auxquels des chaînes de suspension (7, 7a) peuvent être fixées, les chaînes de suspension (7, 7a) plaçant le conteneur (11) dans une position soulevée ou abaissée à l'aide d'une transmission à treuil (6, 6a).

4. Système de transport mobile (1) selon les revendications 1 à 3, **caractérisé en ce que** le conteneur (11) comporte en une position centrale de la zone de la paroi frontale avant (18) un timon (13) pourvu d'une béquille d'équilibrage de niveau (21) et conçu pour pouvoir être rapporté, le. système de transport (1) étant apte à circuler grâce à un véhicule tracteur attelé en conséquence quand le conteneur (11) présente une position abaissée et que les roues (15, 15a) sont en contact avec le plan de roulement.

5. Système de transport mobile (1) selon les revendications 1 à 4, **caractérisé en ce que** le véhicule de transport (2) adopte une position soulevée grâce au passage des chaînes de suspension (7, 7a) dans les anneaux de charge (16, 16a) à partir des anneaux porteurs (17, 17a) et à l'actionnement d'une commande à treuil (6), moyennant quoi les essieux montés (9, 9a) disposés sur le châssis de véhicule sont désolidarisés des rails (10).

6. Système de transport mobile (1) selon les revendications 1 à 5, **caractérisé en ce que** le conteneur (11) adopte une position soulevée grâce à l'accrochage des chaînes de suspension (7, 7a) dans les anneaux porteurs (17, 17a) et à l'actionnement de la commande à treuil (6), moyennant quoi les essieux montés (9, 9a) du véhicule de transport (2) sont en contact avec les rails (10) et le système de transport (1) est apte à circuler sur les rails (10) par l'intermédiaire du véhicule de transport (2).

7. Système de transport mobile (1) selon les revendications 1 à 6, **caractérisé en ce que** le véhicule de transport (2) comporte un entraînement à moteur mécanique ou électrique (8) qui est fixé au support arrière (4) et qui entraîne l'essieu monté arrière (9a), moyennant quoi le véhicule de transport (2) effectue un mouvement de roulement automatique (20), et **en ce que** l'entraînement à moteur (8) peut être conçu pour être radioguidé.

8. Système de transport mobile (1) selon les revendications 1 à 7, **caractérisé en ce que** le conteneur (2), pour la lutte contre les incendies dans des systèmes de tunnels, est conçu comme un espace de respiration ou un dispositif similaire.

9. Système de transport mobile (1) selon les revendications 1 à 8, **caractérisé en ce qu'**il est conçu pour être utilisé en alternance comme système de transport (1) ferroviaire ou comme système de transport (1) apte au transport routier.
